# FASCICULE DE BREVET EUROPEEN

(11) **EP 3 259 159 B1**
(45) Date de publication et mention de la délivrance du brevet: **25.11.2020**
(21) Numéro de dépôt: 16714470.8
(22) Date de dépôt: 18.02.2016
(51) Int. Cl.: B60R 25/24, H04W 76/10, H04W 12/06, H04W 12/00, H04W 4/48, H04W 4/80, H04W 84/20

(54) **PROCÉDÉ DE MISE EN OEUVRE D'UNE CONNEXION ENTRE UN DISPOSITIF ÉLECTRONIQUE ESCLAVE ET UN DISPOSITIF ÉLECTRONIQUE MAÎTRE, ET DISPOSITIF ÉLECTRONIQUE ESCLAVE ASSOCIÉ**
VERFAHREN ZUR IMPLEMENTIERUNG EINER VERBINDUNG ZWISCHEN EINER ELEKTRONISCHEN SLAVE-VORRICHTUNG UND ELEKTRONISCHEN MASTER-VORRICHTUNG UND ZUGEHÖRIGE ELEKTRONISCHE SLAVE-VORRICHTUNG
METHOD FOR IMPLEMENTING A CONNECTION BETWEEN A SLAVE ELECTRONIC DEVICE AND A MASTER ELECTRONIC DEVICE, AND RELATED SLAVE ELECTRONIC DEVICE

(30) Priorité: 18.02.2015 FR 1500315
(43) Date de publication de la demande: 27.12.2017
(73) Titulaire: Valeo Comfort and Driving Assistance, 94046 Créteil Cedex (FR)
(72) Inventeur: PETEL, Laurent, 94046 Créteil Cedex (FR)
(74) Mandataire: Delplanque, Arnaud
(86) Numéro de dépôt international: PCT/FR2016/050376
(87) Numéro de publication internationale: WO 2016/132077

(56) Documents cités:
- EP-A1- 1 568 834
- WO-A1-2014/146186
- WO-A1-2015/032979
- US-A1- 2012 007 712
- US-B2- 8 626 144

## Description

### DOMAINE TECHNIQUE AUQUEL SE RAPPORTE L'INVENTION

La présente invention concerne les systèmes de communication sans fil, en particulier selon le protocole « Bluetooth Low Energy (BLE) », comprenant un dispositif électronique maître et un dispositif électronique esclave.

Elle concerne plus particulièrement un procédé de mise en œuvre d'une connexion entre un dispositif électronique esclave et un dispositif électronique maître, ainsi qu'un dispositif électronique esclave associé. Ce procédé est conçu de manière à permettre l'établissement d'une connexion entre le dispositif électronique esclave et un dispositif électronique maître autorisé et à refuser l'établissement d'une connexion entre le dispositif électronique esclave et un dispositif électronique maître non autorisé.

L'invention s'applique particulièrement avantageusement dans le cas où le dispositif électronique maître équipe un terminal utilisateur du type terminal de poche, par exemple du type téléphone portable ou téléphone intelligent (expression dérivée de l'expression anglo-saxonne « smartphone » communément utilisée), et où le dispositif électronique esclave équipe un véhicule automobile.

### ARRIERE-PLAN TECHNOLOGIQUE

On a proposé de commander certaines fonctionnalités d'un véhicule automobile, telles que le déverrouillage/verrouilage des portes et/ou le démarrage du véhicule, au moyen d'un terminal utilisateur, par exemple un téléphone intelligent couramment utilisé par l'utilisateur du véhicule.

Pour ce faire, un module de communication du terminal utilisateur entre en communication, par exemple selon le protocole BLE, avec un module de communication correspondant installé dans le véhicule automobile.

Selon le protocole BLE, avant qu'une telle communication soit établie, le module de communication installé dans le véhicule, ici en tant que dispositif esclave, émet typiquement des trames indiquant sa disponibilité pour une connexion (connectabilité), afin que le terminal utilisateur, ici en tant que maître, puisse répondre par exemple par une requête de connexion, ce qui permet normalement d'aboutir à l'établissement de la connexion précitée.

D'autres dispositifs électroniques que le terminal utilisateur peuvent toutefois répondre aux trames diffusées, en émettant également une requête de connexion destinée au module de communication installé dans le véhicule.

Même si l'ouverture d'une telle communication entre un dispositif électronique non autorisé et le module de communication du véhicule est vouée à l'échec (puisque le dispositif électronique non autorisé ne dispose pas des droits pour commander les fonctionnalités du véhicule), la connexion entre un dispositif électronique non autorisé et le module de communication du véhicule s'établit et rend indisponible pendant toute la durée de cette connexion, le module de communication du véhicule au terminal utilisateur détenu par l'utilisateur du véhicule, ce qui rend empêche toute commande d'une fonctionnalité par cet utilisateur.

Afin de résoudre ce type de problème, il est prévu dans la norme BLE de mettre en œuvre au niveau des dispositifs de type esclave, une liste d'équipements maîtres autorisés à initier une connexion. Ainsi, seul un dispositif maître dont l'adresse est dans la liste se voit autorisé sa demande de connexion.

Néanmoins, dans le cas d'équipements maître du type smartphone, un problème important subsiste, dans la mesure ou leur adresse est modifiée régulièrement pour des rasions de sécurité. Il en résulte que l'adresse d'un téléphone intelligent donné contenu dans une liste sera rapidement inopérante, ce qui entrainera ainsi le refus de connexion à un équipement autorisé.

### OBJET DE L'INVENTION

Dans ce contexte, la présente invention vise à résoudre ce problème et propose un procédé de mise en œuvre d'une connexion entre un dispositif électronique esclave et au moins un dispositif maître, tel que défini par la revendication 1.

Le procédé de mise en œuvre d'une connexion peut en outre comprendre une ou plusieurs des caractéristiques suivantes :
- suite à la réception par le dispositif électronique maître de la moins une trame (ADV3 ; ADV6) indicative de disponibilité, il comprend les étapes suivantes :
   ∘ émission (E44 ; E122) par ledit au moins un dispositif électronique maître (26) d'une requête de connexion (CONNECT_REQ) à destination du dispositif électronique esclave (16) ;
   ∘ réception et acceptation (E46, E48, E50 ; E124) par le dispositif électronique esclave (16), de la requête de connexion (CONNECT_REQ) en provenance dudit au moins un dispositif électronique maître (26) ;
- tant que le dispositif électronique esclave n'est pas configuré avec l'adresse courante dudit au moins un dispositif électronique maître, le dispositif électronique esclave diffuse (au moins) une trame indicative d'indisponibilité si aucune adresse de dispositif électronique maître n'est encore enregistrée ;
- tant que le dispositif électronique esclave n'est pas configuré avec l'adresse courante dudit au moins un dispositif électronique maître, le dispositif électronique esclave diffuse des trame indicative de disponibilité si l'adresse d'au moins un dispositif électronique maître est enregistrée ;
- la diffusion par le dispositif électronique esclave d'au moins une trame indicative de disponibilité directe (qui suit la configuration du dispositif électronique esclave avec l'adresse courante dudit au moins un dispositif électronique maître) correspond à un trame de disponibilité dirigée spécifiquement pour le dudit au moins un dispositif électronique maître ;
- la diffusion par le dispositif électronique esclave d'au moins une trame indicative de disponibilité, qui suit la configuration du dispositif électronique esclave avec l'adresse courante dudit au moins un dispositif électronique maître, correspond à une trame de disponibilité indirecte ;
- le dispositif électronique esclave est initialement en mode diffusion et, après réception d'une requête par le dispositif électronique esclave en provenance du dispositif électronique maître donné, une étape de basculement du dispositif électronique esclave dans un mode incluant un balayage est mise en œuvre ;
- le dispositif électronique esclave équipe un véhicule ;
- le dispositif électronique maître équipe un terminal utilisateur, par exemple du type téléphone intelligent ;
- le procédé comprend en outre les étapes suivantes :
   ∘ établissement d'une connexion entre le dispositif électronique maître et le dispositif électronique esclave ;
   ∘ authentification du terminal utilisateur par une unité électronique de commande du véhicule via la connexion établie.
- en cas d'authentification, le procédé comprend une étape de commande d'une fonctionnalité du véhicule par le terminal utilisateur.

L'invention propose également un dispositif électronique esclave, tel que défini par la revendication 10.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un exemple de contexte dans lequel peut-être mise en œuvre l'invention, comprenant notamment un véhicule et un terminal utilisateur ;
- la figure 2 représente schématiquement des composants, utiles à la compréhension de l'invention, du véhicule et du terminal utilisateur de la figure 1 ;
- la figure 3 représente les étapes principales d'un premier exemple de procédé de connexion conforme à l'invention ; et
- la figure 4 représente les étapes principales d'un second exemple de procédé de connexion conforme à l'invention.

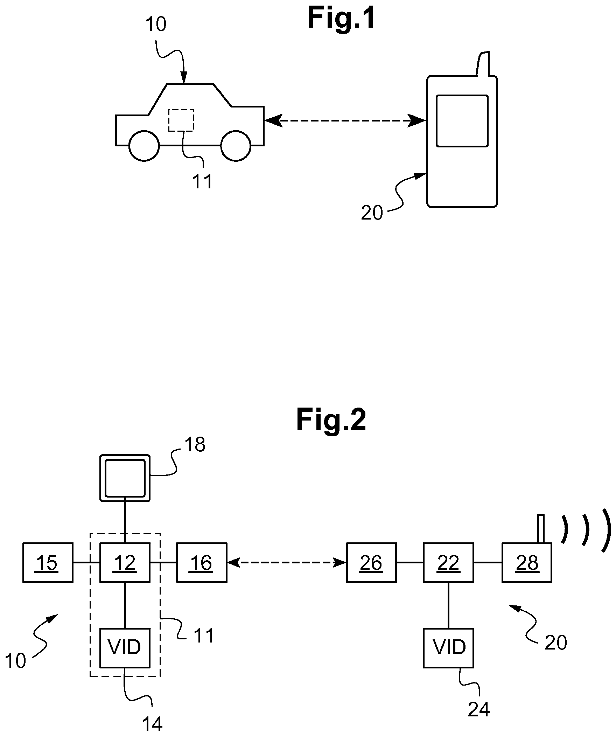

La figure 1 représente un exemple de contexte dans lequel peut être mise en œuvre l'invention.

Dans ce contexte, un véhicule 10 comprend une unité électronique de commande 11 (ou ECU pour "*Electronic Control Unit*") qui peut entrer en communication via une liaison sans fil avec un terminal utilisateur 20, par exemple un téléphone portable (ou téléphone cellulaire), éventuellement de type *"téléphone intelligent*" ou "*smartphone*" selon la dénomination anglo-saxonne couramment utilisée, afin d'échanger des données avec ce terminal utilisateur 20, par exemple en vue de la commande de fonctionnalités du véhicule 10 au moyen du terminal utilisateur 20 (une telle fonctionnalité pouvant être par exemple le déverrouillage des portes du véhicule 10).

La liaison sans fil utilisée pour communiquer entre l'unité électronique de commande 11 et le terminal utilisateur 20 est par exemple de type Bluetooth, ici en particulier de type Bluetooth Low Energy (BLE).

Le terminal utilisateur 20 est par ailleurs conçu pour se connecter à un réseau de téléphonie mobile (non représenté).

La figure 2 représente schématiquement des composants, utiles à la compréhension de l'invention, du véhicule 10 et du terminal utilisateur 20.

Le véhicule 10 comprend notamment l'unité électronique de commande 11 déjà mentionnée, un actionneur 15 (conçu ici pour permettre le déverrouillage des portes du véhicule 10), un module de communication sans fil 16, ici selon la technologie Bluetooth Low Energy (BLE), et une interface utilisateur 18.

L'unité électronique de commande 11 comprend un processeur 12 et une unité de mémorisation 14, par exemple une mémoire non-volatile réinscriptible ou un disque dur.

L'unité de mémorisation 14 mémorise notamment des programmes d'ordinateur comprenant des instructions dont l'exécution par le processeur 12 permet la mise en oeuvre par l'unité électronique de commande 11 des procédés décrits ci-dessous.

L'unité de mémorisation 14 mémorise également des données utilisées dans le cadre des procédés décrits ci-dessous, notamment un secret VID, qui est en outre ici représentatif de l'identité du véhicule. En variante, il pourrait s'agir d'un secret dédié, indépendant de l'identité du véhicule.

Le secret VID est par exemple écrit dans l'unité de mémorisation 14 lors de la fabrication de l'unité électronique de commande 11, avant montage de cette unité électronique de commande 11 dans le véhicule 10.

Le terminal utilisateur 20 comprend un processeur 22, une mémoire 24 (par exemple une mémoire non-volatile réinscriptible), un module de communication sans fil 26, ici selon la technologie Bluetooth Low Energy (BLE), et un module 28 de communication sur le réseau de téléphonie mobile susmentionné.

Dans certains modes de réalisation, le module de communication 28 peut comprendre une carte à puce qui mémorise des données de connexion associées à un abonnement au service de téléphonie mobile et permettant d'établir la connexion sur le réseau de téléphonie mobile.

La mémoire 24 mémorise le secret VID susmentionné (également mémorisé au sein de l'unité électronique de commande 11 du véhicule 10). Le secret VID a été transmis au terminal utilisateur 20 au préalable, par exemple lors d'une phase de souscription au service de commande de fonctionnalités du véhicule au moyen d'un terminal utilisateur, en utilisant éventuellement le réseau de téléphonie mobile précité.

Le module de communication sans fil 26 du terminal utilisateur 20 permet d'établir une liaison sans fil (ici de type Bluetooth comme déjà indiqué) avec le module de communication sans fil 16 du véhicule 10 à travers laquelle le processeur 12 de l'unité électronique de commande 11 et le processeur 22 du terminal utilisateur 20 peuvent échanger des données, notamment en vue de l'authentification du terminal utilisateur 20 par l'unité électronique de commande 11 afin de commander, en cas d'authentification réussie, la fonctionnalité désirée (ici le déverrouillage des portes du véhicule).

Le module de communication sans fil 16 du véhicule 10 et le module de communication sans fil 26 du terminal utilisateur 20 peuvent chacun être dans un mode diffusion (mode "*advertising*" en technologie Bluetooth) et/ou dans un mode balayage (mode "*scanning*" en technologie Bluetooth).

Lorsqu'un module de communication sans fil 16, 26 est en mode diffusion, il peut être dans l'un des états suivants :
- non disponible ("*non-connectable*") pour une connexion avec un autre appareil et il émet alors des trames indicatives d'indisponibilité ;
- disponible pour une connexion avec un appareil quelconque ("*connectable undirected*") et il émet alors des trames indicative de disponibilité indirecte ;
- disponible pour une connexion exclusivement avec l'un des appareils mentionnés dans une liste ("*connectable white list*") et il émet alors des trames indicatives de disponibilité indirecte ;
- disponible pour une connexion avec un appareil spécifique ("*connectable directed*") et il émet alors des trames de disponibilité directe.

Lorsqu'un module de communication sans fil 16, 26 est en mode balayage, il peut émettre :
- une requête d'informations destinée à un appareil en mode diffusion afin que cet appareil lui communique des informations complémentaires ;
- une requête de connexion destinée à un appareil en mode diffusion afin d'initier une connexion avec cet appareil.

Lorsqu'un appareil en mode diffusion reçoit une requête d'informations en provenance d'un appareil en mode balayage, l'appareil en mode diffusion répond à cette requête par l'émission d'une réponse destinée à l'appareil en mode balayage et contenant les informations complémentaires.

On remarque qu'il est souhaitable, dans le contexte des figures 1 et 2, que le module de communication sans fil 16 du véhicule 10 joue le rôle de périphérique (ou esclave) dans la communication sans fil établie du fait qu'en pratique, le module de communication sans fil de certains terminaux de type téléphone portable, susceptibles de constituer le terminal utilisateur 20, sont systématiquement configurés en tant que dispositif central (ou maître).

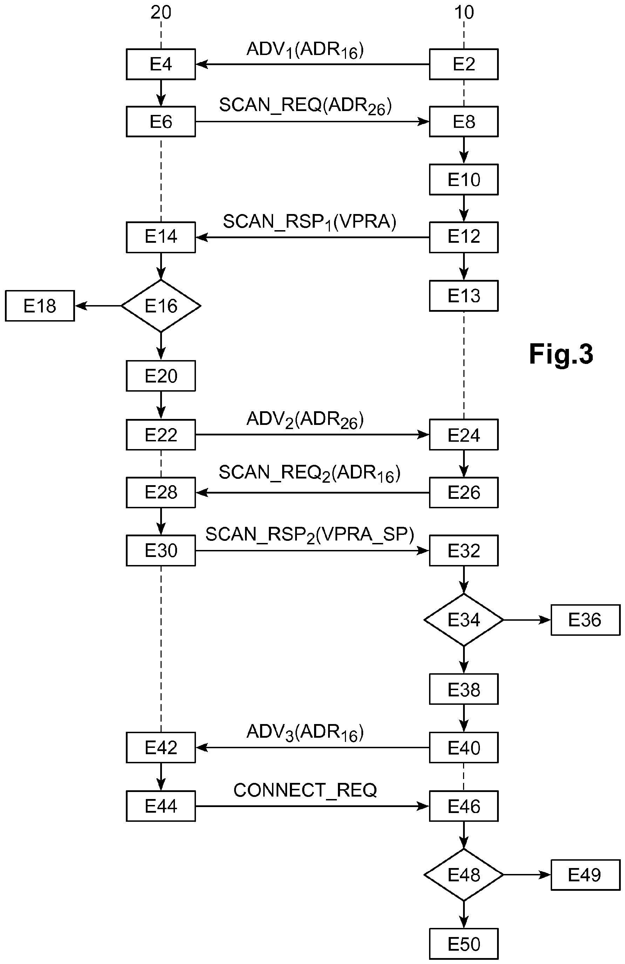

La figure 3 représente les étapes principales d'un premier exemple de procédé de connexion conforme à l'invention.

Dans cet exemple, le module de communication sans fil 16 du véhicule 10 est initialement en mode diffusion et émet des trames de disponibilité indirecte ; on considère ici qu'il est disponible pour une connexion avec l'un des appareils mentionnés dans une liste ("*advertising white list*"). Le module de communication sans fil 16 est par exemple configuré dans ce mode par l'unité électronique de commande 11. L'utilisation du mode diffusion est avantageuse puisqu'elle permet de limiter la consommation électrique du module de communication sans fil 16.

La liste contient par exemple initialement les adresses (dans le système d'échange sans fil concerné, ici Bluetooth) de clés physiques utilisant la même technologie de communication avec le module de communication sans fil 16 pour permettre un déverrouillage à distance des portes du véhicule 10. La liste peut également contenir des adresses d'autres appareils qui ont pu se connecter préalablement au module de communication sans fil 16 en suivant par exemple un processus du type décrit ici.

On considère ici que le terminal utilisateur 20 ne s'est en revanche jamais connecté au préalable au module de communication sans fil 16 et que l'adresse courante du module de communication sans fil 26 est donc inconnue du module de communication sans fil 16.

Le module de communication sans fil 26 du terminal utilisateur 20 est quant à lui en mode diffusion et balayage.

Le procédé débute à l'étape E2 à laquelle le module de communication sans fil 16 du véhicule 10 émet comme déjà indiqué une trame ADV₁ indicative de disponibilité indirecte. Dans l'exemple décrit ici, il s'agit d'une trame de type ADV_ IND.

Cette trame contient l'adresse ADR₁₆ du module de communication sans fil 16 dans le système d'échange sans fil concerné (ici Bluetooth).

Cette trame peut contenir en outre des informations indiquant que le module de communication sans fil 16 peut être utilisé dans le cadre d'un service de commande de fonctionnalités du véhicule au moyen d'un terminal utilisateur (information *"*e*xpose service*")*.*

Le module de communication sans fil 26 du terminal utilisateur 20 reçoit la trame ADV₁ et l'adresse ADR₁₆ à l'étape E4.

Le module de communication sans fil 26 émet alors à l'étape E6 une requête d'informations SCAN_REQ₁, accompagnée de sa propre adresse (adresse courante) ADR₂₆.

Le module de communication sans fil 16 du véhicule 10 reçoit la requête d'informations SCAN_REQ₁ et l'adresse ADR₂₆ à l'étape E8.

L'unité électronique de commande 11 du véhicule 10 prépare alors à l'étape E10 une première donnée d'authentification VPRA, par exemple par concaténation d'un nombre aléatoire RND et du résultat RES de l'application d'une fonction cryptographique f au secret VID et au nombre aléatoire RND :
VPRA = (RND | RES), avec RES = f(VID,RND).

Le nombre aléatoire RND est par exemple déterminé par tirage aléatoire par l'unité électronique de commande 11, soit lors de la mise en œuvre de l'étape E10, soit périodiquement. En variante, on pourrait utiliser à la place du nombre aléatoire RND une valeur déterministe variable, par exemple un compteur incrémenté à chaque exécution de l'étape E10 ou une valeur dépendant du temps écoulé (par exemple exprimé en minutes) depuis un instant initial prédéterminé.

Le module de communication sans fil 16 peut ainsi émettre à l'étape E12 une réponse SCAN_RSP₁ destinée au module de communication sans fil 26 du terminal utilisateur 20 et contenant la première donnée d'authentification VPRA (ainsi qu'éventuellement à nouveau l'adresse ADR₁₆).

Lorsqu'on utilise à la place du nombre aléatoire RND une valeur déterministe que le processeur 22 du terminal utilisateur 20 peut déterminer par lui-même (par exemple lorsque cette valeur est un compteur partagé entre le terminal utilisateur 20 et le véhicule 10, ou une valeur dépendant du temps écoulé depuis un instant initial prédéterminé connu du terminal utilisateur 20 et du véhicule 10), on pourrait ne transmettre à l'étape E12 que le résultat RES mentionné ci-dessus (au lieu de l'ensemble VPRA).

Après émission de la réponse SCAN_RSP₁ à l'étape E12, l'unité électronique de commande 11 commande le passage (ou basculement) du module de communication sans fil 16 en mode diffusion et balayage (étape E13).

Le module de communication sans fil 26 du terminal utilisateur 20 reçoit la réponse SCAN_RSP₁ et la première donnée d'authentification VPRA à l'étape E14.

Le processeur 22 peut ainsi vérifier à l'étape E16 que le résultat RES reçu au sein de la première donnée d'authentification VPRA a bien été calculé au moyen d'un secret égal au secret VID mémorisé dans la mémoire 24 (en vérifiant si on a bien : RES = f(VID,RND) où RES et RND sont ici les données reçues dans la première donnée d'authentification VPRA et VID la donnée mémorisée dans la mémoire 24), ce qui permet pour le terminal utilisateur 20 de s'assurer qu'il est bien en train d'initier une connexion avec le véhicule souhaité (qui partage le secret VID).

Si la vérification de l'étape E16 ne se fait pas correctement, le processeur 22 procède à l'étape E18 à laquelle il est mis fin au processus de connexion.

Si la vérification de l'étape E16 se fait correctement, le processeur 22 détermine à l'étape E20 une seconde donnée d'authentification VPRA_SP, formée par exemple de la concaténation d'une valeur aléatoire RND_SP et du résultat RES_SP de l'application de la fonction cryptographique f (ou d'une autre fonction cryptographique) au secret VID et à la valeur aléatoire RND_SP :
VPRA_SP = (RND_SP | RES_SP), avec RES_SP=f(VID,RND_SP).

La valeur aléatoire RND_SP peut être déterminée, au moins en partie, par tirage aléatoire. La valeur aléatoire RND_SP peut également dépendre, par exemple en partie, du nombre aléatoire RND reçu à l'étape E14. Ainsi, la valeur aléatoire RND_SP peut par exemple comprendre certains octets déterminés par tirage aléatoire et d'autres octets pris égaux à un nombre prédéfini d'octets du nombre aléatoire RND.

Comme indiqué précédemment pour le nombre aléatoire RND, la valeur aléatoire RND_SP peut être remplacée par une valeur déterministe variable (déterminable en parallèle par le processeur 22 du terminal utilisateur 20 et l'unité électronique de commande 11 du véhicule 10).

VPRA_SP peut être aussi tout ou partie du résultat d'une fonction cryptographique dont l'entrée est tout ou partie de VPRA, permettant ainsi une authentification plus forte du téléphone intelligent (VPRA est utilisé comme défi).

Le module de communication sans fil 26 diffuse alors à l'étape E22 une trame ADV₂ indiquant sa disponibilité. Une telle trame peut également indiquer que le terminal utilisateur 20 sollicite la mise en place du service de commande de fonctionnalités du véhicule au moyen du terminal utilisateur (information "*solicit service*"), ainsi qu'éventuellement à nouveau l'adresse ADR₂₆.

Selon une variante de réalisation différente de celle décrite sur la figure 3, la trame diffusée à l'étape E22 pourrait contenir la seconde donnée d'authentification VPRA_SP. Selon cette variante, on procède directement à l'étape E34 décrite ci-dessous.

Dans l'exemple de la figure 3, la module de communication sans fil 16 du véhicule 10 reçoit à l'étape E24 la trame ADV₂ diffusée (ce qui est possible du fait du passage en mode diffusion et balayage à l'étape E13).

Le module de communication sans fil 16 émet alors une requête d'informations SCAN_REQ₂ destinée au module de communication sans fil 26 du terminal utilisateur 20 (éventuellement accompagnée de l'adresse ADR₁₆).

Le module de communication sans fil 26 du terminal utilisateur 20 reçoit la requête d'informations SCAN_REQ₂ à l'étape E28 et émet en réponse une réponse SCAN_RSP₂ incluant l'adresse ADR₂₆ et la seconde donnée d'authentification VPRA_SP (étape E30).

Le module de communication sans fil 16 du véhicule 10 reçoit la réponse SCAN_RSP₂ et la seconde donnée d'authentification VPRA_SP à l'étape E32.

L'unité électronique de commande 11 (précisément le processeur 12) peut ainsi vérifier à l'étape E34 que le résultat RES_SP reçu au sein de la seconde donnée d'authentification VPRA_SP a bien été calculé au moyen d'un secret identique au secret VID mémorisé dans l'unité de mémorisation 14 (en vérifiant si on a bien : RES_SP = f(VID,RND_SP) où RES_SP et RND_SP sont ici les données reçues dans la seconde donnée d'authentification VPRA_SP et VID la donnée mémorisée dans l'unité de mémorisation 14), ce qui permet à l'unité électronique de commande de s'assurer que le terminal utilisateur 20 qui cherche à se connecter détient bien le secret partagé VID (puisqu'il a été en mesure de déterminer le résultat RES_SP associé à la valeur aléatoire RDN_SP au moyen de ce secret partagé VID).

Si la vérification de l'étape E34 ne se fait pas correctement, l'unité électronique de commande 11 met fin au processus de connexion (étape E36). On remarque que le module de communication sans fil 26 du terminal utilisateur 20 ne peut pas forcer une connexion avec le module de communication sans fil 16 du véhicule 10 puisque ce dernier est disponible pour une connexion (seulement, c'est-à-dire exclusivement) avec des dispositifs électroniques présents dans la liste précitée, qui n'inclut pas le module de communication sans fil 26.

Si la vérification de l'étape E34 se fait correctement, l'unité électronique de commande 11 configure le module de communication sans fil 16 en commandant l'ajout dans la liste précitée de l'adresse courante ADR₂₆ du dispositif de communication sans fil 26 du terminal 20 (étape E38).

Le module de communication sans fil 16 diffuse alors à l'étape E40 une trame ADV₃ indiquant qu'il est disponible pour une connexion avec l'un des appareils mentionnés dans la liste précitée (trame de disponibilité indirecte). Comme pour la trame émise à l'étape E2, cette trame peut contenir l'adresse ADR₁₆ du module de communication sans fil 16 et des informations indiquant que le module de communication sans fil 16 peut être utilisé dans le cadre d'un service de commande de fonctionnalités du véhicule au moyen d'un terminal utilisateur (information "*expose service*")*.*

Cette trame ADV₃ est reçue par le module de communication sans fil 26 du terminal utilisateur 20 (dont on rappelle qu'il fonctionne en mode balayage) à l'étape E42.

Le module de communication sans fil 26 du terminal utilisateur 20 peut alors émettre à l'étape E44 une requête de connexion CONNECT_REQ destinée au module de communication sans fil 16 du véhicule 10, qui comprend l'adresse ADR₁₆ de ce module destinataire et l'adresse ADR₂₆ du module de communication sans fil 26 (émetteur).

Le module de communication sans fil 16 du véhicule 10 reçoit la requête de connexion CONNECT_REQ et l'adresse ADR₂₆ à l'étape E46.

Le module de communication sans fil 16 peut ainsi déterminer à l'étape E48 si l'adresse ADR₂₆ reçue à l'étape E46 fait partie de la liste précitée (ce qui est normalement le cas grâce à l'ajout de l'étape E38).

Dans l'affirmative, le module de communication sans fil 16 accepte la requête et procède à l'établissement de la connexion avec le module de communication sans fil 26 (étape E50), par exemple afin de réaliser à travers cette connexion une authentification du terminal utilisateur 20 auprès de l'entité électronique de commande 11 en vue d'une commande d'une fonctionnalité du véhicule 10 (par exemple le déverrouillage des portes du véhicule 10) au moyen du terminal utilisateur 20.

Dans la négative (ce qui n'est normalement pas le cas dans le procédé représenté à la figure 3), ceci signifie que le terminal utilisateur qui tente de se connecter n'a pas été inscrit dans la liste précitée et que sa connexion n'est donc pas possible.

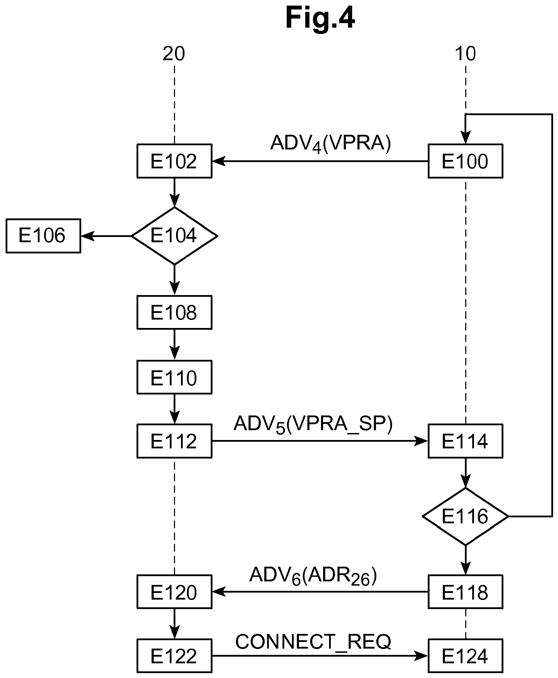

La figure 4 représente les étapes principales d'un second exemple de procédé de connexion conforme à l'invention.

Dans cet exemple, le module de communication sans fil 16 du véhicule 10 est initialement en mode diffusion et balayage, et émet des trames indiquant qu'il n'est pas disponible pour une connexion ("*non connectable*"). Le module de communication sans fil 16 est par exemple configuré dans ce mode par l'unité électronique de commande 11.

Le module de communication sans fil 26 du terminal utilisateur 20 est quant à lui en mode balayage.

Le procédé de la figure 4 débute à l'étape E100 par la diffusion par le module de communication sans fil 16 d'une trame ADV₄ indiquant qu'il n'est pas disponible pour une connexion, comme déjà indiqué. Cette trame est par exemple du type ADV_NONCONN_IND.

La trame ADV₄ comprend ici l'adresse ADR₁₆ du module de communication sans fil 16 et une première donnée d'authentification VPRA du même type que celle utilisée dans l'exemple de la figure 3 (calculée à l'étape E10).

Le module de communication sans fil 26 du terminal utilisateur 20 reçoit la trame ADV₄, l'adresse ADR₁₆ et la donnée d'authentification VPRA à l'étape E102.

Le processeur 22 peut ainsi vérifier à l'étape E104 que la donnée d'authentification VPRA reçue a bien été calculée en utilisant un secret identique au secret VID mémorisé dans la mémoire 24 (comme décrit ci-dessus à l'étape E16 pour le procédé de la figure 3).

Si la vérification de l'étape E104 n'est pas correctement effectuée, le processeur 22 met fin à l'étape E106 au processus de connexion (le véhicule dont la trame a été reçue n'étant pas dans ce cas le véhicule dont on souhaite commander une fonctionnalité).

Si la vérification de l'étape E106 s'est correctement effectuée, le processeur 22 détermine à l'étape E108 une seconde donnée d'authentification VPRA_SP, de manière identique à ce qui a été décrit ci-dessus en référence à la figure 3 (étape E20).

Le processeur 22 commande alors à l'étape E110 le passage du module de communication sans fil 26 en mode balayage et diffusion.

Le module de communication sans fil 26 peut ainsi diffuser à l'étape E112 une trame ADV₅ contenant la seconde donnée d'authentification VPRA_SP et sa propre adresse ADR₂₆ (adresse courante). Cette trame ADV₅ indique par exemple que le module de communication sans fil 26 n'est pas disponible pour une connexion (trame de type ADV_NONCONN_IND).

Le module de communication sans fil 16 du véhicule 10 reçoit la trame ADV₅, l'adresse courante ADR₂₆ et la seconde donnée d'authentification VPRA_SP à l'étape E114.

L'unité électronique de commande 11 peut ainsi vérifier à l'étape E116 que la seconde donnée d'authentification VPRA_SP a été déterminée en utilisant un secret identique au secret VID mémorisé dans l'unité de mémorisation 14, comme décrit ci-dessus en référence à la figure 3 (étape E34).

Si cette vérification est négative (ce qui correspond au cas où le terminal utilisateur qui a préparé la seconde donnée d'authentification VPRA_SP reçue à l'étape E114 ne détenait pas le secret VID), l'unité électronique de commande n'autorise pas la connexion avec le terminal utilisateur 20 et boucle à l'étape E100, à laquelle des trames d'indisponibilité de connexion sont diffusées.

Si la vérification de l'étape E116 est positive, l'unité électronique de commande 11 configure le module de communication sans fil 16 au moyen de l'adresse courante ADR₂₆ de manière à diffuser à l'étape E118 des trames ADV₆ indicatives de sa disponibilité pour le module de communication sans fil 26 (identifié par l'adresse ADR₂₆ reçue avec la seconde donnée d'authentification VPRA_SP).

Pour ce faire, l'unité électronique de commande 11 peut commander au module de communication sans fil 16 :
- soit de diffuser des trames ADV₆ (ici de type ADV_IND) indicatives de disponibilité indirecte, le module de communication sans fil 16 étant disponible pour une connexion avec l'un des appareils mentionnés dans une liste ("*white list*"), en incluant l'adresse ADR₂₆ du module de communication sans fil 26 du terminal utilisateur 20 dans cette liste ;
- soit de diffuser des trames ADV₆ (ici de type ADV_DIRECT_IND) indiquant qu'il est disponible pour une connexion spécifiquement ("*connectable directed*") avec l'appareil identifié par l'adresse ADR26 (c'est-à-dire le module de communication sans fil 26 du terminal utilisateur 20).

Le module de communication sans fil 26 reçoit la trame ADV₆ à l'étape E120 et peut ainsi émettre une requête de connexion CONNECT_REQ à destination du module de communication sans fil 16 à l'étape E122.

Le module de communication sans fil 16 du véhicule 10 reçoit et accepte la requête de connexion CONNECT_REQ à l'étape E124 et initie alors la communication sans fil avec le module de communication sans fil 26 du terminal utilisateur 20, par exemple afin de réaliser une authentification du terminal utilisateur 20 auprès de l'entité électronique de commande 11 en vue d'une commande d'une fonctionnalité du véhicule 10 (par exemple le déverrouillage des portes du véhicule 10) au moyen du terminal utilisateur 20.

L'invention n'est pas limitée aux modes de réalisation qui viennent d'être décrits. La portée de l'invention se limite néanmoins à I objet tel que défini par les revendications.

Dans un exemple, il est envisageable d'utiliser un procédé dans lequel le module de communication sans fil 16 du véhicule 10 est initialement en mode diffusion et balayage (avec diffusion de trames indicatives d'indisponibilité ou de disponibilité exclusivement pour une liste de dispositifs électroniques, comme à l'étape E2) et dans lequel sont mises en œuvre les étapes E20 à E50 décrites ci-dessus en référence à la figure 3 (sans procéder au préalable aux étapes E4 à E16).

Dans un tel procédé, il est possible (mais non obligatoire) de mettre en oeuvre en outre une authentification du module de communication sans fil 16 du véhicule 10 par le module de communication sans fil 26 du terminal 20 (par exemple selon des étapes semblables aux étapes E2 à E16 de la figure 3) avant de procéder à l'émission de la requête de connexion CONNECT_REQ.

Dans un tel procédé (de même que lorsque le procédé de la figure 3 est mis en oeuvre dans son ensemble), il est par ailleurs possible de remplacer l'étape E40 (diffusion de trames ADV₃ indiquant une disponibilité indirecte et connexion possible avec l'un des appareils mentionnés dans une liste) par une étape de diffusion de trames indiquant que le module de communication sans fil 16 est disponible pour une connexion spécifiquement avec le module de communication sans fil 26 (désigné par son adresse ADR₂₆), ce qui rend également possible l'émission par le module de communication sans fil 26 d'une requête de connexion destinée au module de communication sans fil 16 et l'initiation d'une connexion entre ces deux modules.

## Revendications

1. Procédé de mise en œuvre d'une connexion, dans le cadre d'une communication sans fil selon le protocole « Bluetooth™ Low Energy », entre un dispositif électronique esclave (16) équipant un véhicule et au moins un dispositif maître (26) équipant un terminal utilisateur, le dispositif maître (26) comprenant une unité de mémorisation (24) dans laquelle est écrit un secret le dispositif esclave (16) comprenant une unité de mémorisation (14) dans laquelle est écrit ledit secret, le procédé de mise en œuvre d'une connexion comprenant les étapes suivantes :
- émission (E30 ; E112) par le au moins un dispositif électronique maître (26) d'une trame (SCAN_RSP₂ ; ADV₅) contenant une information d'authentification (VPRA_SP) calculée au moyen d'un secret égal au secret mémorisé dans l'unité de mémorisation (24) du dispositif maître (26) et au moins l'adresse courante (ADR₂₆) dudit au moins un dispositif électronique maître (26) ;
- réception (E32 ; E114) par le dispositif électronique esclave (16) de l'adresse courante (ADR₂₆) dudit au moins un dispositif électronique maître (26) et de ladite information d'authentification (VPRA_SP) en provenance dudit au moins un dispositif électronique maître (26) ;
- vérification (E34 ; E116) par le dispositif électronique esclave (16) de ladite information d'authentification reçue (VPRA_SP) en s'assurant qu'un le résultat (RES_SP) reçu au sein de l'information d'authentification (VPRA_SP) a bien été calculé au moyen d'un secret identique au secret mémorisé dans l'unité de mémorisation (14);
- si la vérification est positive,
∘ configuration (E38) du dispositif électronique esclave (16) avec l'adresse courante (ADR₂₆) dudit au moins un dispositif électronique maître (26) en commandant l'ajout dans une liste de l'adresse courante (ADR₂₆) du dispositif maître (26);
∘ diffusion (E40 ; E118) par le dispositif électronique esclave (16) d'au moins une trame (ADV₃ ; ADV₆) indicative de disponibilité pour une connexion avec un des dispositifs mentionnés dans ladite liste.

2. Procédé selon la revendication 1, dans lequel suite à la réception par le dispositif électronique maître de la moins une trame (ADV3 ; ADV6) indicative de disponibilité, il comprend les étapes suivantes :
∘ émission (E44 ; E122) par ledit au moins un dispositif électronique maître (26) d'une requête de connexion (CONNECT_REQ) à destination du dispositif électronique esclave (16) ;
∘ réception et acceptation (E46, E48, E50 ; E124) par le dispositif électronique esclave (16), de la requête de connexion (CONNECT_REQ) en provenance dudit au moins un dispositif électronique maître (26).

3. Procédé selon la revendication 1, dans lequel, tant que le dispositif électronique esclave (16) n'est pas configuré avec l'adresse courante dudit au moins un dispositif électronique maître (26), le dispositif électronique esclave (16) diffuse une trame indicative d'indisponibilité si aucune adresse de dispositif électronique maître (26) n'est encore enregistrée.

4. Procédé selon la revendication 1, dans lequel, tant que le dispositif électronique esclave (16) n'est pas configuré avec l'adresse courante dudit au moins un dispositif électronique maître (26), le dispositif électronique esclave (16) diffuse une trame indicative de disponibilité si l'adresse d'au moins un dispositif électronique maître (26) est enregistrée.

5. Procédé selon l'une des revendications 1 à 3, dans lequel, la diffusion par le dispositif électronique esclave (16) d'une trame indicative de disponibilité, qui suit la configuration du dispositif électronique esclave (16) avec l'adresse courante dudit au moins un dispositif électronique maître (26), correspond à une trame de disponibilité directe spécifiquement pour le dudit au moins un dispositif électronique maître (26).

6. Procédé selon l'une des revendications 1 à 3, dans lequel, la diffusion par le dispositif électronique esclave (16) d'une trame indicative de disponibilité, qui suit la configuration du dispositif électronique esclave (16) avec l'adresse courante dudit au moins un dispositif électronique maître (26), correspond à une trame de disponibilité indirecte.

7. Procédé selon l'une des revendications 1 à 5, dans lequel le dispositif électronique esclave (16) est initialement en mode diffusion et dans lequel, après réception (E8) d'une requête (SCAN_REQ) par le dispositif électronique esclave (16) en provenance du dispositif électronique maître (26), une étape de basculement (E13) du dispositif électronique esclave (16) dans un mode incluant un balayage est mise en œuvre.

8. Procédé selon la revendication 8 prise dans la dépendance de la revendication 7, comprenant en outre les étapes suivantes :
- établissement d'une connexion entre le dispositif électronique maître (26) et le dispositif électronique esclave (16) ;
- authentification du terminal utilisateur (20) par une unité électronique de commande (11) du véhicule (10) via la connexion établie.

9. Procédé selon la revendication 9, comprenant, en cas d'authentification, une étape de commande d'une fonctionnalité du véhicule (10) par le terminal utilisateur (20).

10. Dispositif électronique esclave (16), opérant dans le cadre d'une communication sans fil selon le protocole « Bluetooth™ Low Energy », ledit dispositif esclave (16) comprenant une unité de mémorisation (14) dans laquelle est écrit un secret, **caractérisé en ce qu'**il comprend des circuits conçus pour :
- recevoir, en provenance d'un dispositif électronique maître (26), opérant dans le cadre d'une communication sans fil selon le protocole « Bluetooth™ Low Energy », une trame (SCAN_RSP₂ ; ADV₅) contenant une information d'authentification (VPRA_SP) calculée au moyen d'un secret égal au secret mémorisé dans une unité de mémorisation (24) du dispositif maître (26) et au moins l'adresse courante (ADR₂₆) dudit dispositif électronique maître (26) ;
- vérifier ladite information d'authentification reçue (VPRA_SP) en s'assurant qu'un le résultat (RES_SP) reçu au sein de l'information d'authentification (VPRA_SP) a bien été calculé au moyen d'un secret identique au secret mémorisé dans l'unité de mémorisation (14) du dispositif électronique esclave (16);
- si la vérification est positive, se configurer avec l'adresse courante (ADR₂₆) dudit dispositif électronique maître (26) en commandant l'ajout dans une liste de l'adresse courante (ADR₂₆) du dispositif maître (26);
- diffuser une trame (ADV₃ ; ADV₆) indicative de disponibilité pour une connexion avec une des dispositifs mentionnés dans ladite liste;
- recevoir et accepter une requête de connexion (CONNECT_REQ) en provenance dudit dispositif électronique maître (26).

## Patentansprüche

1. Verfahren zur Implementierung einer Verbindung, im Rahmen einer drahtlosen Kommunikation gemäß dem Protokoll "Bluetooth™ Low Energy", zwischen einer in ein Fahrzeug eingebauten elektronischen Slave-Vorrichtung (16) und mindestens einer in ein Benutzer-Endgerät eingebauten Master-Vorrichtung (26), wobei die Master-Vorrichtung (26) eine Speichereinheit (24) enthält, in die ein Geheimnis eingeschrieben ist, wobei die Slave-Vorrichtung (16) eine Speichereinheit (14) enthält, in die das Geheimnis eingeschrieben ist, wobei das Verfahren zur Implementierung einer Verbindung die folgenden Schritte enthält:
- Senden (E30; E112), durch die mindestens eine elektronische Master-Vorrichtung (26), eines Rahmens (SCAN_RSP₂; ADV₅), der eine Authentifizierungsinformation (VPRA_SP), die mittels eines Geheimnisses gleich dem in der Speichereinheit (24) der Master-Vorrichtung (26) gespeicherten Geheimnis berechnet wird, und mindestens die aktuelle Adresse (ADR₂₆) der mindestens einen elektronischen Master-Vorrichtung (26) enthält;
- Empfang (E32; E114), durch die elektronische Slave-Vorrichtung (16), der aktuellen Adresse (ADR₂₆) der mindestens einen elektronischen Master-Vorrichtung (26) und der Authentifizierungsinformation (VPRA_SP) von der mindestens einen elektronischen Master-Vorrichtung (26);
- Überprüfung (E34; E116), durch die elektronische Slave-Vorrichtung (16), der empfangenen Authentifizierungsinformation (VPRA_SP), indem sichergestellt wird, dass ein in der Authentifizierungsinformation (VPRA_SP) empfangenes Ergebnis (RES_SP) tatsächlich mittels eines Geheimnisses gleich dem in der Speichereinheit (14) gespeicherten Geheimnis berechnet wurde;
- wenn die Überprüfung positiv ist,
∘ Konfiguration (E38) der elektronischen Slave-Vorrichtung (16) mit der aktuellen Adresse (ADR₂₆) der mindestens einen elektronischen Master-Vorrichtung (26), indem die Hinzufügung der aktuellen Adresse (ADR₂₆) der Master-Vorrichtung (26) in eine Liste gesteuert wird;
∘ Verbreitung (E40; E118), durch die elektronische Slave-Vorrichtung (16), mindestens eines Rahmens (ADV₃; ADV₆), der eine Verfügbarkeit für eine Verbindung mit einer der in der Liste erwähnten Vorrichtungen anzeigt.

2. Verfahren nach Anspruch 1, wobei es nach dem Empfang des mindestens einen eine Verfügbarkeit anzeigenden Rahmens (ADV3; ADV6) durch die elektronische Master-Vorrichtung die folgenden Schritte enthält:
∘ Senden (E44; E122), durch die mindestens eine elektronische Master-Vorrichtung (26), einer Verbindungsanforderung (CONNECT_REQ) an die elektronische Slave-Vorrichtung (16);
∘ Empfang und Akzeptanz (E46, E48, E50; E124), durch die elektronische Slave-Vorrichtung (16), der von der mindestens einen elektronische Master-Vorrichtung (26) kommenden Verbindungsanforderung (CONNECT_REQ) .

3. Verfahren nach Anspruch 1, wobei, so lange die elektronische Slave-Vorrichtung (16) nicht mit der aktuellen Adresse der mindestens einen elektronischen Master-Vorrichtung (26) konfiguriert ist, die elektronische Slave-Vorrichtung (16) einen eine Nichtverfügbarkeit anzeigenden Rahmen verbreitet, wenn noch keine Adresse einer elektronischen Master-Vorrichtung (26) gespeichert ist.

4. Verfahren nach Anspruch 1, wobei, so lange die elektronische Slave-Vorrichtung (16) nicht mit der aktuellen Adresse der mindestens einen elektronischen Master-Vorrichtung (26) konfiguriert ist, die elektronische Slave-Vorrichtung (16) einen eine Verfügbarkeit anzeigenden Rahmen verbreitet, wenn die Adresse mindestens einer elektronischen Master-Vorrichtung (26) gespeichert ist.

5. Verfahren nach einem der Ansprüche 1 bis 3, wobei die Verbreitung, durch die elektronische Slave-Vorrichtung (16), eines eine Verfügbarkeit anzeigenden Rahmens, der auf die Konfiguration der elektronischen Slave-Vorrichtung (16) mit der aktuellen Adresse der mindestens einen elektronischen Master-Vorrichtung (26) folgt, einem Rahmen direkter Verfügbarkeit speziell für die mindestens eine elektronische Master-Vorrichtung (26) entspricht.

6. Verfahren nach einem der Ansprüche 1 bis 3, wobei die Verbreitung, durch die elektronische Slave-Vorrichtung (16), eines eine Verfügbarkeit anzeigenden Rahmens, der auf die Konfiguration der elektronischen Slave-Vorrichtung (16) mit der aktuellen Adresse der mindestens einen elektronischen Master-Vorrichtung (26) folgt, einem Rahmen indirekter Verfügbarkeit entspricht.

7. Verfahren nach einem der Ansprüche 1 bis 5, wobei die elektronische Slave-Vorrichtung (16) anfangs im Verbreitungsmodus ist, und wobei, nach Empfang (E8) einer Anforderung (SCAN_REQ) durch die elektronische Slave-Vorrichtung (16) von der elektronischen Master-Vorrichtung (26) kommend, ein Schritt des Umschaltens (E13) der elektronischen Slave-Vorrichtung (16) in einen ein Abtasten enthaltenden Modus durchgeführt wird.

8. Verfahren nach Anspruch 8 in Abhängigkeit von Anspruch 7, das außerdem die folgenden Schritte enthält:
- Aufbau einer Verbindung zwischen der elektronischen Master-Vorrichtung (26) und der elektronische Slave-Vorrichtung (16);
- Authentifizierung des Benutzer-Endgeräts (20) durch eine elektronische Steuereinheit (11) des Fahrzeugs (10) über die aufgebaute Verbindung.

9. Verfahren nach Anspruch 9, das im Fall einer Authentifizierung einen Steuerschritt einer Funktion des Fahrzeugs (10) durch das Benutzer-Endgerät (20) enthält.

10. Elektronische Slave-Vorrichtung (16), die im Rahmen einer drahtlosen Kommunikation gemäß dem Protokoll "Bluetooth™ Low Energy" arbeitet, wobei die Slave-Vorrichtung (16) eine Speichereinheit (14) enthält, in die ein Geheimnis eingetragen ist, **dadurch gekennzeichnet, dass** sie Schaltungen enthält, die konzipiert sind, um:
- von der elektronischen Master-Vorrichtung (26) kommend, die im Rahmen einer drahtlosen Kommunikation gemäß dem Protokoll "Bluetooth™ Low Energy" arbeitet, einen Rahmen (SCAN_RSP₂; ADV₅) zu empfangen, der eine Authentifizierungsinformation (VPRA_SP), die mittels eines Geheimnisses gleich dem in einer Speichereinheit (24) der Master-Vorrichtung (26) gespeicherten Geheimnis berechnet wird, und mindestens die aktuelle Adresse (ADR₂₆) der elektronischen Master-Vorrichtung (26) enthält;
- die empfangene Authentifizierungsinformation (VPRA_SP) zu überprüfen, indem sichergestellt wird, dass ein innerhalb der Authentifizierungsinformation (VPRA_SP) empfangenes Ergebnis (RES_SP) tatsächlich mittels eines Geheimnisses gleich dem in der Speichereinheit (14) der elektronischen Slave-Vorrichtung (16) gespeicherten Geheimnis berechnet wurde;
- wenn die Überprüfung positiv ist, sich mit der aktuellen Adresse (ADR₂₆) der elektronischen Master-Vorrichtung (26) zu konfigurieren, indem die Hinzufügung der aktuellen Adresse (ADR₂₆) der Master-Vorrichtung (26) in eine Liste gesteuert wird;
- einen eine Verfügbarkeit anzeigenden Rahmen (ADV₃; ADV₆) für eine Verbindung mit einer der in der Liste erwähnten Vorrichtungen zu verbreiten;
- eine von der elektronischen Master-Vorrichtung (26) kommende Verbindungsanforderung (CONNECT_REQ) zu empfangen und zu akzeptieren.

## Claims

1. Method for implementing a connection, in the context of a wireless communication according to the "Bluetooth™ Low Energy" protocol, between a slave electronic device (16), which is provided in a vehicle, and at least one master device (26), which is provided in a user terminal, the master device (26) comprising a storage unit (24) to which a secret is written, the slave device (16) comprising a storage unit (14) to which said secret is written, the method for implementing a connection comprising the following steps:
- the at least one master electronic device (26) transmitting (E30; E112) a frame (SCAN_RSP₂; ADV₅) containing an item of authentication information (VPRA_SP), which is computed by means of a secret equal to the secret stored in the storage unit (24) of the master device (26), and at least the current address (ADR₂₆) of said at least one master electronic device (26) ;
- the slave electronic device (16) receiving (E32; E114) the current address (ADR₂₆) of said at least one master electronic device (26) and said item of authentication information (VPRA_SP) from said at least one master electronic device (26);
- the slave electronic device (16) verifying (E34; E116) said received item of authentication information (VPRA_SP) by making sure that a result (RES_SP) received within the item of authentication information (VPRA_SP) has indeed been computed by means of a secret identical to the secret stored in the storage unit (14);
- if the verification is positive,
∘ configuring (E38) the slave electronic device (16) with the current address (ADR₂₆) of said at least one master electronic device (26) by ordering the current address (ADR₂₆) of the master device (26) to be added to a list;
∘ the slave electronic device (16) broadcasting (E40; E118) at least one frame (ADV₃; ADV₆) indicative of availability for a connection to one of the devices specified in said list.

2. Method according to Claim 1, wherein, after the master electronic device has received the at least one frame (ADV3; ADV6) indicative of availability, said method comprises the following steps:
∘ said at least one master electronic device (26) transmitting (E44; E122) a connection request (CONNECT_REQ) to the slave electronic device (16);
∘ the slave electronic device (16) receiving and accepting (E46, E48, E50; E124) the connection request (CONNECT_REQ) from said at least one master electronic device (26).

3. Method according to Claim 1, wherein, as long as the slave electronic device (16) is not configured with the current address of said at least one master electronic device (26), the slave electronic device (16) broadcasts a frame indicative of unavailability if no address of a master electronic device (26) has yet been recorded.

4. Method according to Claim 1, wherein, as long as the slave electronic device (16) is not configured with the current address of said at least one master electronic device (26), the slave electronic device (16) broadcasts a frame indicative of availability if the address of at least one master electronic device (26) is recorded.

5. Method according to one of Claims 1 to 3, wherein the broadcasting of a frame indicative of availability by the slave electronic device (16), which follows the configuration of the slave electronic device (16) with the current address of said at least one master electronic device (26), corresponds to a direct availability frame specifically for said at least one master electronic device (26).

6. Method according to one of Claims 1 to 3, wherein the broadcasting of a frame indicative of availability by the slave electronic device (16), which follows the configuration of the slave electronic device (16) with the current address of said at least one master electronic device (26), corresponds to an indirect availability frame.

7. Method according to one of Claims 1 to 5, wherein the slave electronic device (16) is initially in broadcast mode, and wherein, after the slave electronic device (16) has received (E8) a request (SCAN_REQ) from the master electronic device (26), a step of switching (E13) the slave electronic device (16) into a mode that includes a scanning operation is implemented.

8. Method according to Claim 8 when said claim is dependent on Claim 7, further comprising the following steps:
- setting up a connection between the master electronic device (26) and the slave electronic device (16) ;
- an electronic control unit (11) of the vehicle (10) authenticating the user terminal (20) via the connection that has been set up.

9. Method according to Claim 9, comprising, in the case of authentication, a step of the user terminal (20) controlling a function of the vehicle (10).

10. Slave electronic device (16), which operates in the context of a wireless communication according to the "Bluetooth™ Low Energy" protocol, said slave device (16) comprising a storage unit (14) to which a secret is written, **characterized in that** said slave electronic device comprises circuits designed for:
- receiving, from a master electronic device (26), which operates in the context of a wireless communication according to the "Bluetooth™ Low Energy" protocol, a frame (SCAN_RSP₂; ADV₅) containing an item of authentication information (VPRA_SP), which is computed by means of a secret equal to the secret stored in a storage unit (24) of the master device (26), and at least the current address (ADR₂₆) of said master electronic device (26);
- verifying said received item of authentication information (VPRA_SP) by making sure that the result (RES_SP) received within the item of authentication information (VPRA_SP) has indeed been computed by means of a secret identical to the secret stored in the storage unit (14) of the slave electronic device (16);
- if the verification is positive, configuring said slave electronic device with the current address (ADR₂₆) of said master electronic device (26) by ordering the current address (ADR₂₆) of the master device (26) to be added to a list;
- broadcasting a frame (ADV₃; ADV₆) indicative of availability for a connection to one of the devices specified in said list;
- receiving and accepting a connection request (CONNECT_REQ) from said master electronic device (26).
